# EUROPEAN PATENT APPLICATION

(11) **EP 2 325 746 A1**
(43) Date of publication of application: **25.05.2011**
(21) Application number: 08792471.8
(22) Date of filing: 14.08.2008
(51) Int. Cl.: G06F 9/445

(54) **DUAL-BOOT CONTROL METHOD AND DUAL-BOOT COMPUTER**

(71) Applicant: Suginaka, Junko, Minato-ku, Tokyo 105-0001 (JP)
(72) Inventor: Suginaka, Junko, Minato-ku, Tokyo 105-0001 (JP)
(74) Representative: Müller - Hoffmann & Partner
(86) International application number: PCT/JP2008/064590
(87) International publication number: WO 2010/018632

(57) **Abstract**

There is provided a dual-boot control method for a personal computer capable of being connected with the Internet by way of a router in an information processor connected with a dedicated network. In this method, when the personal computer is booted, an MBR program and an OS program are read, prior to a HDD, from an attachable and detachable storage medium mounted in a storage medium mounting unit, and when the HDD is utilized, route setting is applied to the information processor, as part of an information transmission line; when the storage medium is utilized, route setting is implemented in such a way that the connection with the Internet is broken. Accordingly, there can be maintained the high security in which virus infection and hacking are eliminated.

## Description

### Technical Field

The present invention relates to a dual-boot control technology for a personal computer in which two kinds of operating systems (OSs) can selectively be accessed.

### Background Art

Conventionally, there has been known a dual/multi-boot method for setting two or more OSs in a single personal computer. Patent Document 1 proposes a method in which, in the processing where out of OSs stored in a hard disk, a designated OS is read by use of the corresponding MBR (Master Boot Recorder) designated by a BIOS (Basic Input/output System) program at the time the computer is booted up, two or more OSs are installed in a single hard disk so that multi-booting is performed. Through this method, the safety of MBR information can be ensured, and the system is prevented from failing to start.

Patent Document 2 proposes a multi-bootable computer in which out of two selectively installable OSs of the same kind, one OS implements communication application programs such as a browser and a mailer and the other OS is a stand-alone type so that security measures are provided only for the one OS. This multi-bootable computer provides an advantage that without providing communication security measures to all the OSs, the security for the whole system can be achieved.
[Patent Document 1] Japanese Unexamined Patent Application Publication No. 2008-16030
[Patent Document 2] Japanese Unexamined Patent Application Publication No. 2006-201919

### Disclosure of Invention

### Problems to be Solved by the Invention

Each of the multi-boot methods described in Patent Documents 1 and 2 is a type in which two or more OSs are installed in a single and the same hard disk and a selected OS is deployed on a single and the same RAM of the computer. Accordingly, in the case where when a communication application program is used, the hard disk is once infected with a computer virus, an application that is operated with another OS may be infected with the virus when that another OS is used. Moreover, the method disclosed in Patent Document 1 is a type in which two or more OSs are installed on a single and the same hard disk; therefore, there is possibility that a document file or an image file created based on an OS other than that being used is wrongfully read or destroyed through hacking from the outside or a program is wrongfully modified. In addition, in Patent Document 1, as a conventional technology, there is roughly explained an ordinary technology in which an OS is installed on each of the hard disks and the OSs are multi-booted; however, it is not described whether or not the hard disks are exchangeable, and the relationship with a communication application program is not described at all.

The objective of the present invention is to propose a high-security dual-boot control method and a high-security dual-boot computer in which in a dual-boot computer, even when a communication application can be utilized based on one OS, virus infection and hacking are eliminated when the other OS is utilized.

### Means for Solving Problem

A dual-boot control method according to the present invention is a dual-boot control method for a personal computer connected with the Internet by way of a router in an information processor connected with a dedicated network, which is different from the Internet. The dual-boot control method includes a first boot process in which in response to the activation of the computer, a BIOS program is booted and a first OS preliminarily stored in a hard disk is deployed in a reset RAM so that the first OS is enabled to operate, and route setting for communication with at least the Internet is applied to the information processor; and a second boot process in which in the case where an attachable and detachable storage medium in which a second OS is stored is mounted in a storage medium mounting unit, the BIOS program is booted and the second OS preliminarily stored in the mounted attachable and detachable storage medium is preferentially deployed in the reset RAM so that the second OS is enabled to operate, and route setting for communication only with the information processor is applied to the information processor.

A dual-boot computer according to the present invention is connected with the Internet by way of a router in an information processor connected with a dedicated network, which is different from the Internet. The dual-boot computer includes a first boot control means in which in response to the activation of the computer, a BIOS program is booted and a first OS preliminarily stored in a hard disk is deployed in a reset RAM so that the first OS is enabled to operate, and route setting for communication with at least the Internet is applied to the information processor; and a second boot control means in which in the case where an attachable and detachable storage medium in which a second OS is stored is mounted in a storage medium mounting unit, the BIOS program is booted and the second OS preliminarily stored in the mounted attachable and detachable storage medium is preferentially deployed in the reset RAM so that the second OS is enabled to operate, and route setting for communication only with the information processor is applied to the information processor.

According to these inventions, the personal computer selectively performs switching between the connection with the Internet and the connection with the information processor. When in response to the activation of the computer, a BIOS program is booted, as a first boot process, a first OS preliminarily stored in the hard disk is deployed in a reset RAM so that the first OS is enabled to operate, and route setting for communication with at least the Internet is applied to the information processor.

In contrast, in the case where an attachable and detachable storage medium in which a second OS is stored is mounted in a storage medium mounting unit, the BIOS program is booted, and then, as a second boot process, the second OS preliminarily stored in the mounted attachable and detachable storage medium is preferentially deployed in the reset RAM so that the second OS is enabled to operate, and route setting for communication with at least the information processor is applied to the information processor.

### Effects of the Invention

According to the present invention, in a dual-boot computer, even when a communication application can be utilized based on one OS, there can be maintained the high security in which virus infection and hacking are eliminated when the other OS is utilized, because route setting and RAM reset processing for each OS have been implemented.

### Brief Description of the Drawings

FIG. 1 is a schematic diagram of the overall configuration of an electronic settlement support system, including the Internet and a dedicated network, to which a dual-boot computer according to the present invention is applied;
FIG. 2 is a diagram for illustrating the configuration of a control board unit 10 of a personal computer terminal 1 and for explaining boot control at a time when the personal computer terminal 1 is utilized in a normal mode;
FIG. 3 is a diagram for illustrating the configuration of a control board unit 10 of a personal computer terminal 1 and for explaining boot control at a time when the personal computer terminal 1 is utilized as an auxiliary for an information processor 2; and
FIG. 4 is a flowchart of boot control performed by an information processing unit 12, which is the CPU of the personal computer terminal 1.

### Explanation of Reference Numbers

1 personal computer terminal (personal computer)
11 HDD
12 information processing unit (1st boot control unit)
14 operation unit (operation member)
15 disk mounting unit
2 information processor
201 control unit (2nd boot control unit)
202 router function unit (router)
24 data storage unit

### Best Mode for Carrying Out the Invention

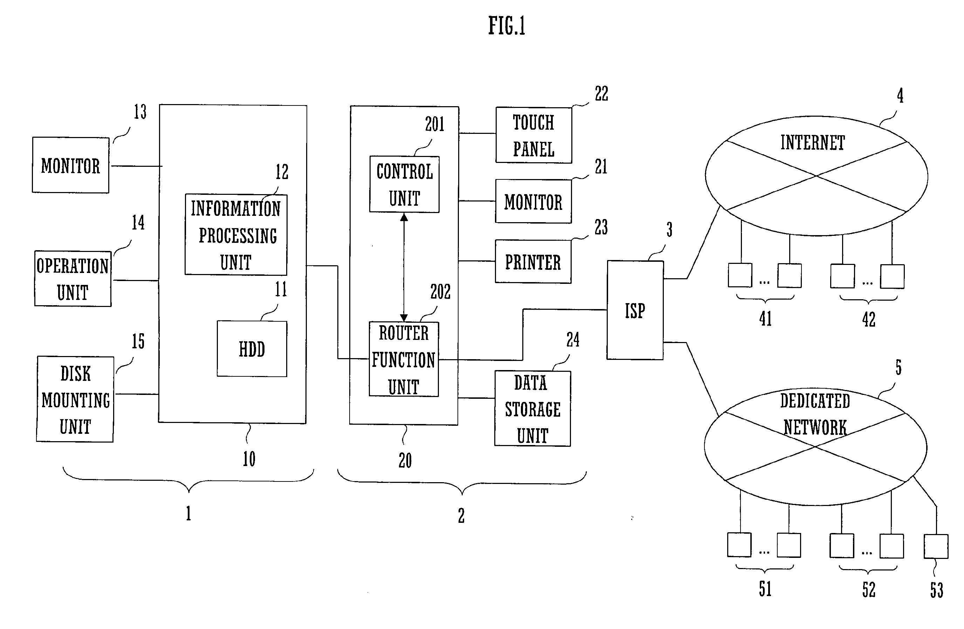

FIG. 1 is a schematic diagram of the overall configuration of an electronic settlement support system, including the Internet and a dedicated network, to which a dual-boot computer according to the present invention is applied. The electronic settlement support system illustrated in FIG. 1 supports electronic settlement among the members registered in an established organization; for example, the electronic settlement support system enables settlement in general commercial transactions, such as issue or receipt of an invoice by a trader's shop, a buyer's order of payment to the account in the contracted banking institution of an invoice issuer, issue of a receipt for that payment, and the like, and transmission/reception processing for various kinds of electronic documents, regardless of the kind of electronic settlement. An example of utilization form will be described later. As another item to which electronic settlement is applied, the creation and issue of electronic checks, which are electronic-form check papers, are conceivable.

In FIG. 1, the electronic settlement support system is provided with a dual-boot personal computer (personal computer terminal) 1; an information processor 2 that includes a router function, that is regarded, for example, as a modem, and that is provided with a predetermined information processing function (e.g., related to electronic settlement); a provider (ISP) 3 including a router; and the Internet 4 and a dedicated network 5 connected in parallel with ISP 3. The dedicated network 5 is different from the Internet 4; only consumers who are the members of the established organization, stores, enterprises, and banking institutions are authorized to be connected with the dedicated network 5. Accordingly, among the members, electronic files for the foregoing electronic settlement and the like can be transmitted or received over the dedicated network 5. A membership terminal 51 is an information processor disposed at a consumer's house, a store, an enterprise or the like; banking institution terminals 52 are disposed at one or a plurality of banking institutions represented by a bank; a management institution computer 53 is disposed at a management institution that integrally implements electronic-file transmission/reception between the terminals 51 and 52 (and the information processor 2, as well) , and management and storage of electronic files. The membership terminal 51 is configured with at least information processors 2; as a desired embodiment (i.e., as described later, the personal computer terminal 1 replaces (is supplementarily utilized to replace) part of the functions of the information processor 2, for example, information input operation), the membership terminal 51 may have a configuration comprising with the personal computer terminal 1 and the information processor 2.

A computer 41 is an ordinary personal computer connected with the Internet 4 by the intermediary of the corresponding ISP (unillustrated); a server 42 is an ordinary information storage means that enables searching and reading of information by use of the browser in the computer 41 and stores public information and the like on the Web site.

The controller 1 is roughly provided with a control board unit 10 including a hard disk (HDD) 11 and an information processing unit 12 formed of a CPU (Central Processing Unit) ; a monitor 13 that displays various kinds of images; an operation unit 14 including a keyboard for instructing various kinds of operations and inputting information, a mouse, and the like; and a disk mounting unit 15 on which a disk such as a CD ROM is mounted in an attachable and detachable manner. Additionally, there are provided an unillustrated power switch and the like.

The information processor 2 has a housing in a predetermined shape, e.g., in the shape of a rectangular parallelepiped; inside the information processor 2, there is provided with an unillustrated modulator and an unillustrated demodulator for performing the original modem function, and on an appropriate position of the surface thereof, there is provided a wiring terminal for inputting and outputting. The modulator modulates information created by the personal computer terminal 1 into a signal form that can be transmitted over the Internet 4 and modulates information created by the information processor 2 into a signal form that can be transmitted over the dedicated network 5; the demodulator demodulates a signal received over the Internet 4 into a signal form that can be processed by the personal computer terminal 1 and demodulates a signal received over the dedicated network 5 inco a signal form that can be processed by the information processor 2.

On an appropriate position of the surface thereof, the information processor 2 is provided with a monitor 21 that is formed of a liquid-crystal panel or a plasma display panel and displays an image, a touch panel 22 disposed on the monitor 21 in a stacking manner, an unillustrated power switch, and the like. A printer 23 prints an image on a sheet of recording paper. The information processor 2 is provided with a data storage unit 24. In the data storage unit 24, processing programs (OS programs and application programs) for implementing various operations are stored (including an aspect in which the processing programs are installed from the outside) in a ROM unit; further, in the ROM unit, form data for various documents are stored. On the other hand, files or the like thereof related to electronic settlement are stored in a RAM unit.

Furthermore, the information processor 2 has a control unit 201 and a router function unit 202 in the control board unit 20. The control unit 201, provided with a CPU, performs creation support processing for an information item (file) such as a predetermined document or an image, data storage processing, and file transmission/reception processing.

The router function unit 202 performs allocation of transmission lines for (performs routing of) information items among the personal computer terminal 1, the control unit 201 of the information processor 2, the Internet 4, and the dedicated network 5. In the case where only the information processor 2 is booted, the information processor 2 implements setting in such a way that information can be transmitted and received between the dedicated network 5 and the control unit 201; thus, the router function unit 202 is disconnected from the Internet 4.

In contrast, as described later, in the case where the personal computer terminal 1 is booted, route setting processing is performed along with the booting. In other words, in the case where the personal computer terminal 1 is utilized in the normal mode, the route is set in the router function unit 202 of the information processor 2 in such a way that the personal computer terminal 1 is connected with the other computer 41 and the server 42 through the IPS 3 and the Internet 4, so that the personal computer terminal 1 and the Internet 4 is connected with each other. In this situation, the router function unit 202 makes the information processor 2 function just as part of the transmission line. It is assumed that the information processor 2 is in the power-on state.

On the other hand, when being utilized as an auxiliary of the information processor 2, the personal computer terminal 1 is booted in a state, described later, where a predetermined disk, e.g., a CD ROM 6 is mounted in the disk mounting unit 15. In this case, as described later, the personal computer terminal 1 is connected only with the control unit 201 (and the data storage unit 24) of the information processor 2, and the route is set in the router function unit 202 in such a way that the information processor 2 is connected with the other terminals 51 and 52 and the management institution computer 53 through the ISP 3 and the dedicated network 5. The route setting signifies setting of address information (a routing table or an ARP (Address Resolution Protocol) table) for determining whether the address information, which is added to a predetermined position in each of packets as a transmission signal or a reception signal and indicates a transmission destination, is a global IP address complying with the protocol for the Internet 4 or a predetermined local IP address (MAC address) (having a format that can be distinguished from a global IP address) that is given through a method different from the method of giving an global IP address and complies with the protocol for the dedicated network 5, e.g., the Ethernet (registered trademark). A packet is compared with a table and then is transmitted to the route whose address coincides with the address of the packet; thus, the transmission line can be limited (switched).

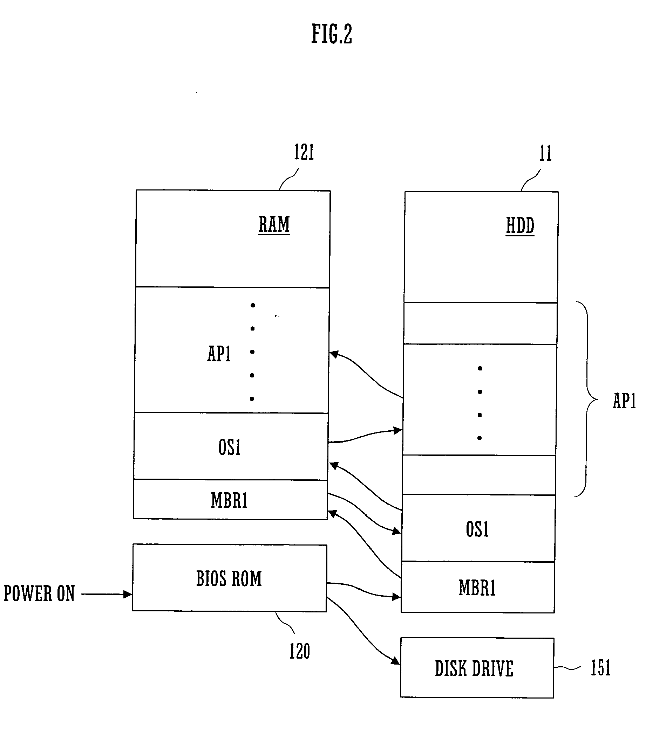

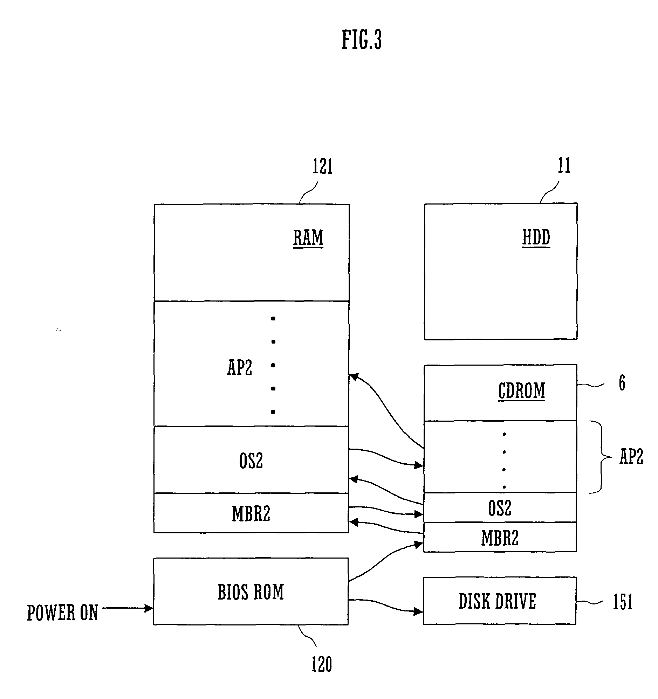

FIGS. 2 and 3 each represent the configuration of the control board unit 10 of the personal computer terminal 1; FIG. 2 is a diagram for explaining boot control at a time when the personal computer terminal 1 is utilized in the normal mode; FIG. 3 is a diagram for explaining boot control at a time when the personal computer terminal 1 is utilized as an auxiliary of the information processor 2.

In each of FIGS. 2 and 3, the hard disk (HDD) 11 is a ROM that has a predetermined memory capacity and in which predetermined program data is preliminarily stored. A BIOS ROM 120 is provided on the control board unit 10, and a BIOS program is preliminarily stored therein. A RAM 121 is provided on the control board unit 10 and is formed of a memory area and a work area. A disk drive 151 is adapted to access the CD ROM 6 mounted in the disk mounting unit 15 so as to read a predetermined program stored in the CD ROM 6.

In FIG. 2, the HDD11 includes MBR1 (Master Boot Recorder) area in which a master boot program is written, OS1 area in which an operation system program (OS1) such as Windows (registered trademark) is written, and AP1 area in which various kinds of application programs such as a document creation program, a browser, and a mailer are written. The BIOS ROM 120 stores a BIOS program in which memories and peripheral devices are checked and in the case where the CD ROM 6 is not mounted in the disk mounting unit 15, MBR1 program in the HDD 11 is booted. Programs stored in the HDD 11 are sequentially deployed (read) on the RAM 121 when the personal computer terminal 1 is booted. Among the application programs to be booted by OS1 program, there is included a communication control program, for route setting, that permits the router function unit 202 of the information processor 2 to connect the personal computer terminal 1 with the Internet 4. Specifically, there is set address information for establishing a transmission line that connects the personal computer terminal 1 only with the Internet 4.

In FIG. 3, the CD ROM 6 includes MBR2 (Master Boot Recorder) area in which a master boot program is written, OS2 area in which an operation system program (OS2), which is the same as or different from OS1, is written, and AP2 area in which there is written a communication application program for transmitting/receiving documents or transmitting information to/receiving information from the information processor 2.

The BIOS program stored in the BIOS ROM 120 is a program in which memories and peripheral devices are checked and in the case where the CD ROM 6 is mounted in the disk mounting unit 15, MBR2 program in the CD ROM 6 is booted prior to the HDD 11. Programs stored in the HDD 6 are sequentially deployed on the RAM 121 when the personal computer terminal 1 is booted. Among various kinds of application programs to be booted by OS2 program, there is included a communication control program, for route setting, that permits the router function unit 202 of the information processor 2 to connect the personal computer terminal 1 only with the control unit 201 of the information processor 2 and the data storage unit 24. Specifically, there is set address information for establishing a transmission line that connects the personal computer terminal 1 only with the information processor 2 (and the data storage unit 24).

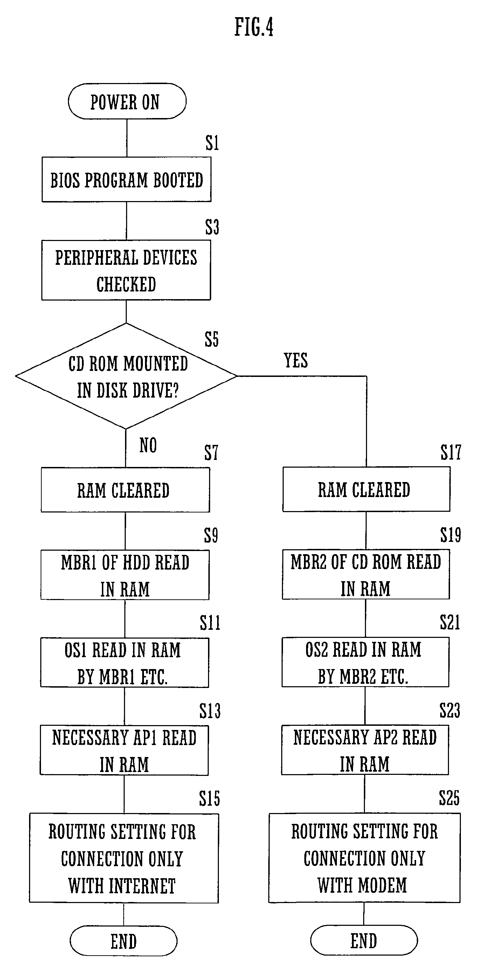

Subsequently, with reference to FIG. 4, there will be explained boot control performed by an information processing unit 12, which is the CPU of the personal computer terminal 1. The flowchart is started when the personal computer terminal 1 is turned on or reset (rebooted).

At first, the control board unit 10, which is a CPU, instructs the implementation of a BIOS program (command) incorporated in the BIOS 120 (the step S1). In the BIOS program, at first, the CPU and the memory are checked, then, the disk mounting unit 15 (or the disk drive 151), which is one of other peripheral devices, is checked (the step S3), i.e., it is checked whether or not the CD ROM 6 has been mounted in the disk mounting unit 15. In the case where the CD ROM 6 has not been mounted in the disk drive 151, MBR1 written in the head part of the HDD 11 is read in the RAM 121, through the OS boot routine in the last part of the BIOS program (the step S9). In the RAM 121, all data has been deleted (cleared), i.e., reset by the information processing unit 12 (CPU) at a time immediately before MBR is read (the step S7). This deleting processing may be implemented before MBR is written or may be implemented at the immediately previous power-off instance.

In contrast, in the case where the CD ROM 6 has been mounted in the disk mounting unit 15, the CD ROM 6 is preferentially booted through the OS boot routine in the last part of the BIOS program; that is to say, in MBR2 written in the head position of the CD ROM 6, all data is immediately previously deleted (cleared) by the information processing unit 12 (CPU); thus, MBR2 is read in the RAM 121 (the step S19), which has been reset (the step S17).

In contrast, in the case where the CD ROM 6 has been mounted in the disk mounting unit 15, the CD ROM 6 is preferentially booted through the OS boot routine in the last part of the BIOS program; that is to say, all data written in the RAM 121 is immediately previously deleted (cleared) by the information processing unit 12 (CPU), in other words, the RAM 121 is reset (the step S17), thus, MBR2 is read in the RAM 121 (the step S19).

Explaining more in detail, in the case where MBR1 in the HDD 11 is read in the RAM 121 (the step S9), the master boot program (boot strap loader) in MBR1 is read in the RAM 121 through the BIOS booting routine; thereafter, control is undertaken by the master boot program. In this master boot program, by checking the partition table in the HDD 11, an active basic partition is searched for; then, the partition boot sector (PBS) located in the head position of that partition is read. When formatting is implemented, the partition boot sector is created by OS1; in the partition boot sector, there are stored a boot program (initial program loader: IPL) for booting OS1 installed in a partition and information on the partition. In the master boot program, the IPL in an active basic partition is read in a memory; thereafter, control is undertaken by the IPL. The IPL searches through the first basic partition of the HDD 11 for the OS loader for booting OS1 and writes the OS loader in a memory; thereafter, control is undertaken by the OS loader. After loading files, such as a driver required to boot OS1 and the like, on the RAM 121 (processes heretofore corresponds to the step S11) and making preparation for booting OS1, the OS loader boots the kernel of the OS1. Thus, OS1 is booted. Next, through OS1, the necessary application program AP1 is read in the RAM 121 (the step S15). Furthermore, through the communication control program in the read application program AP1, route setting for communicatively connecting the personal computer terminal 1 only with the Internet 4 is applied to the router function unit 202 (the step S15).

Explaining more in detail, in the case where the CD ROM 6 is mounted in the disk drive, the master boot program (boot strap loader) in MBR2 is read in the RAM 121 through the BIOS booting routine; thereafter, control is undertaken by the master boot program in the CD ROM 6. In this master boot program in the CD ROM 6, by checking the partition table in the CD ROM. 6, an active basic partition is searched for; then, the partition boot sector (PBS) located in the head position of that partition is read. When formatting is implemented, the partition boot sector is created by OS2; in the partition boot sector, there are stored a boot program (initial program loader: IPL) for booting OS2 installed in a partition and information on the partition. In the master boot program, the IPL in an active basic partition is read in a memory; thereafter, control is undertaken by the IPL. The IPL searches through the first basic partition of the CD ROM 6 for the OS loader for booting OS2 and writes the OS loader in a memory; thereafter, control is undertaken by the OS loader. After loading files, such as a driver required to boot OS2 and the like, on the RAM 121 (processes heretofore corresponds to the step S21) and making preparation for booting OS2, the OS loader boots the kernel of the OS2. Thus, OS2 is booted. Next, through OS2, the necessary application program AP2 is read in the RAM 121 (the step S23). Furthermore, through the communication control program in the read application program AP2, route setting for communicatively connecting the personal computer terminal 1 only with the control unit 201 and data storage unit 24 is applied to the router function unit 202 (the step S25).

In such a manner as described above, in the case where the CD ROM 6 has not been mounted in the disk mounting unit 15, the personal computer terminal 1 comes into the normal mode; OS1 is booted; various kinds of processing items are implemented by use of necessary application programs; and by utilizing a browser or a mailer, transmission/reception of information between the personal computer terminal 1 and the other computer 41 or the server 42 can be performed through the router function unit 202, ISP3, and the Internet 4. In this embodiment, the information processor 2 is nothing but part of the transmission line through which the personal computer terminal 1 transmits information to/receives information from the Internet 4; therefore, even when a virus is intermingled in the transmitted/received information, the information processor 2 is not infected with the virus. Moreover, neither data nor programs in the data storage unit 24 of the information processor 2 are hacked from the outside.

Still moreover, in the case where the CD ROM 6 has been mounted in the disk mounting unit 15, not the HDD 11, which may be infected with a virus, but the OS2 in the CD ROM 6 boots the personal computer terminal 1 as if the OS2 is another personal computer; therefore, there is no possibility that the personal computer terminal 1 is infected with the virus. Furthermore, after the RAM 121 is temporarily cleared, OS2 in the CD ROM 6 and required applications that can be operated by OS2 are read; therefore, no virus remains in the RAM 121, whereby there is no possibility that the required applications that can be operated by OS2 are contaminated. In addition, the control unit 201 of the information processor 2 and the data storage unit 24 are connected only with the personal computer terminal 1; therefore, there is no possibility that a virus is transmitted to the required applications over the Internet 4 or the required applications are hacked. Still moreover, even when the personal computer terminal 1 erroneously instructs the connection between the Internet 4 and the control unit 201 of the information processor 2 or the data storage unit 24, the instruction is refused. Accordingly, high security in the information processor 2 can be maintained.

According to the foregoing explanation, the present embodiment is provided with a first boot process including the step of booting the BIOS program in response to the activation of the personal computer terminal 1 and performing reset processing of the RAM 121; the step of deploying OS1 preliminarily stored in the HDD 11 incorporated in the personal computer terminal 1 in the reset RAM 121 so as to enable OS1 to operate; and the step of applying route setting for communication with at least the Internet 4 to the router function unit 202, which functions as the router of the information processor 2. Moreover, in the case where the CD ROM 6 has been mounted in the disk mounting unit 15, the present embodiment is provided with a second boot process including the step of booting the BIOS program in response to the activation of the personal computer terminal 1 and performing reset processing of the RAM 121; the step of preferentially deploying OS2, preliminarily stored in the CD ROM 6, in the reset RAM 121 so as to enable OS2 to operate; and the step of applying route setting for communication only with the information processor 2 to the router function unit 202 of the information processor 2.

Subsequently, there will briefly be explained an example of use of the information processor 2 or auxiliary use of the personal computer terminal 1.

The information processor 2 determines whether or not a file (such as a document or the like) has been received; in the case where it is determined that a file has been received, the router function unit 202 checks an IP address added to the file. It is determined whether or not the IP address of the file is a global IP address with which route setting has been implemented; in the case where the determination leads to an affirmation, the reception signal, regarded as a reception signal received over the Internet 4, is led to the personal computer terminal 1. In contrast, in the case where the determination leads to a negation, the reception signal, regarded as a reception signal received over the dedicated network 5, is led to the control unit 201 and then is stored in the data storage unit 24.

By use of a document creation program, which is one of the application programs, the information processor 2 performs on the monitor 21 the creation processing of a required document, in accordance with the user's instruction through the touch panel 22. After the document has been created, when transmission of the created document is instructed through the touch panel 22, the control unit 201 performs addition of the local IP address of a transmission destination; then, the created document is transmitted to the corresponding terminals 51 and 52 and the management institution computer 53 over the dedicated network 5.

In the case where instead of inputting information by use of the monitor 21 and the touch panel 22 at the information processor 2, the monitor 13, which in general has a wider size than the monitor 21, and the operation unit 14 are utilized and under the condition of high-visibility and high-operability, the personal computer terminal 1 is supplementarily utilized, in response to the read request from the personal computer terminal 1, the information processor 2 reads requested necessary document information in the data storage unit 24 and outputs it to the personal computer terminal 1 by way of the router function unit 202. The personal computer terminal 1 outputs the received document information to the monitor 13 on which it is displayed. The required document is created with input information from the operation unit 14. The created document is stored in the data storage unit 24 by way of the router function unit 202. Thereafter, transmission of a created document to a transmission destination is performed by the information processor 2. That is to say, a created document is read from the data storage unit 24 and is transmitted to the transmission destination over the dedicated network 5. Explaining in greater detail, the document read from the data storage unit 24 is displayed on the monitor 21 and is recognized as the transmitted document; in response to the transmission command, the document is transmitted over the dedicated network 5 to the terminal 51 or 52, which is the transmission destination, and the management institution computer 53. The management institution computer 53 basically receives all the document files, which are transmitted or received over the dedicated network 5, and stores them with respect to each member or based on the time series.

Documents described in the present invention include invoices issued in shopping, payment sheets for them, and various kinds of electronic documents. For example, there are included a medical information document in the relationship with a hospital, a document including personal information in the relationship with an administration institution, a financial accounting information document of an individual, a business owner, or the like, each tax service document, each educational information document, each legal information document, each insurance information document, a banking transaction document, a resident-registry-network information document, and an electronic check paper.

In the present invention, in the case where the BIOS program detects the state where the CD ROM is mounted in the disk mounting unit 15, MBR2 in the CD ROM 6 is preferentially read; however, the CD ROM may be replaced by a storage medium (ROM) such as a transportable disk, a memory chip, or the like, which is an attachable and detachable type.

Moreover, as the instruction method in which the BIOS program reads MBR2 in the CD ROM 6 prior to the HDD 11 in the personal computer terminal 1, the following modes can be adopted. For example, it may be allowed that a switch (including a button) is provided, as an operation member, at an appropriate position of a housing of the personal computer terminal 1 or more preferably at an appropriate position of the surface of the personal computer terminal 1, the depression state where the switch is operated is set at an appropriate position of a memory, for example, by raising a flag, and then the BIOS program checks for the flag state of the memory. Alternatively, it may be allowed that similarly, a switch (including a button) is provided, as an operation member, at an appropriate position of the housing of the information processor 2, the depression state where the switch is operated is stored in a memory, similarly, by raising a flag, and then the BIOS program checks for the flag state of the memory. In the latter case, it is not required to modify the housing of the personal computer terminal 1.

Moreover, there may be allowed a mode where by use of the keyboard in the operation unit of the personal computer terminal 1, extra operation, e.g., concurrent operation of two specific keys is performed so that priority instruction for the CD ROM 6 is issued. Alternatively, it may be allowed that the BIOS program displays on the monitor 13 a selection image as to which one of the programs OS1 and OS2 is selected so that selection is implemented through predetermined key operation. In addition, instead of the method according to the present embodiment where the selection between OS1 and OS2 is implemented at a timing between BIOS and MBR, it may be allowed that MBR is made to be common and the selection is implemented at the partition boot sector; alternatively, it may be allowed that the process up to the partition boot sector is made to be common and the selection is implemented at the OS loader; further alternatively, it may be allowed that the process up to the OS loader is made to be common and the selection is implemented at the kernel.

As described above, the present invention is a dual-boot control method for a personal computer connected with the Internet by way of a router in an information processor connected with a dedicated network, which is different from the Internet; it is desirable that the dual-boot control method includes a first boot process in which in response to the activation of the computer, the BIOS program is booted and a first OS preliminarily stored in a hard disk is deployed in a reset RAM so that the first OS is enabled to operate, and route setting for communication with at least the Internet is applied to the information processor; and a second boot process in which in the case where an attachable and detachable storage medium in which a second OS is stored is mounted in a storage medium mounting unit, the BIOS program is booted and the second OS preliminarily stored in the mounted attachable and detachable storage medium is preferentially deployed in the reset RAM so that the second OS is enabled to operate, and route setting for communication only with the information processor is applied to the information processor.

Moreover, the present invention is a dual-boot computer connected with the Internet by way of a router in an information processor connected with a dedicated network, which is different from the Internet; it is desirable that the dual-boot computer includes
a first boot control means in which in response to the activation of the computer, the BIOS program is booted and a first OS preliminarily stored in a hard disk is deployed in a reset RAM so that the first OS is enabled to operate, and route setting for communication with at least the Internet is applied to the information processor; and a second boot control means in which in the case where an attachable and detachable storage medium in which a second OS is stored is mounted in a storage medium mounting unit, the BIOS program is booted and the second OS preliminarily stored in the mounted attachable and detachable storage medium is preferentially deployed in the reset RAM so that the second OS is enabled to operate, and route setting for communication only with the information processor is applied to the information processor.

According to these inventions, in a dual-boot computer, even when a communication application can be utilized based on one OS, there is maintained the high security in which virus infection and hacking are eliminated when the other OS is utilized, because route setting and RAM reset processing for each OS have been implemented.

It is preferable that the attachable and detachable storage medium is a CD ROM. In this case, while the personal computer terminal is utilized in the normal mode, the CD ROM can be drawn from the disk drive, whereby connection is broken physically.

It is preferable that priority information is preliminarily set in the BIOS program in such a way that in the case where an attachable and detachable storage medium is mounted in the storage medium mounting unit, the attachable and detachable storage medium is accessed prior to the hard disk of the computer. In this case, because the priority command is preliminarily given to the BIOS program, preferential processing is automatically applied to the storage medium when the BIOS program is booted, in the case where the storage medium is mounted.

It is preferable that an operation member is provided in the personal computer, and by operating the operation member, an instruction is issued to the BIOS program to access the attachable and detachable storage medium prior to the hard disk of the computer. In this case, by operating the operation member when the computer is booted, instruction of priority can be performed.

It is preferable that the operation member is provided in the modem, the BIOS program checks the information processor, as a peripheral device, and in accordance with the state of the operation member, the hard disk of the computer or the attachable and detachable storage medium is preferentially accessed. In this case, by operating the operation member when the computer is booted, instruction of priority can be performed. Additionally, it is not required to modify the personal computer terminal.

it is preferable that the operation member is a switch provided at an appropriate position of a housing surface of the personal computer. In this case, instruction of priority can readily be performed.

### Industrial Applicability

According to the present invention, the BIOS program reads OS and MBR in different disks when a dual-boot computer is booted; therefore, there can be provided a dual-boot computer in which even when a communication application can be utilized based on one OS, there is maintained the high security in which virus infection and hacking are eliminated when the other OS is utilized, because route setting and RAM reset processing for each OS have been implemented.

## Claims

1. A dual-boot control method for a personal computer connected with the Internet by way of a router in an information processor connected with a dedicated network, which is different from the Internet, the dual-boot control method comprising:
a first boot process in which in response to the activation of the computer, a BIOS program is booted and a first OS preliminarily stored in a hard disk is deployed in a reset RAM so that the first OS is enabled to operate, and route setting for communication with at least the Internet is applied to the information processor; and
a second boot process in which in the case where an attachable and detachable storage medium in which a second OS is stored is mounted in a storage medium mounting unit, the BIOS program is booted and the second OS preliminarily stored in the mounted attachable and detachable storage medium is preferentially deployed in the reset RAM so that the second OS is enabled to operate, and route setting for communication only with the information processor is applied to the information processor.

2. The dual-boot control method according to claim 1, wherein the attachable and detachable storage medium is a CD ROM.

3. The dual-boot control method according to any one of claims 1 and 2, wherein priority information is preliminarily set in the BIOS program in such a way that in the case where the attachable and detachable storage medium is mounted in the storage medium mounting unit, the attachable and detachable storage medium is accessed prior to the hard disk of the computer.

4. The dual-boot control method according to any one of claims 1 and 2, wherein an operation member is provided in the personal computer, and by operating the operation member, an instruction is issued to the BIOS program to access the attachable and detachable storage medium prior to the hard disk of the computer.

5. The dual-boot control method according to any one of claims 1 and 2, wherein the operation member is provided in a modem, the BIOS program checks the information processor, as a peripheral device, and in accordance with the state of the operation member, the hard disk of the computer or the attachable and detachable storage medium is preferentially accessed.

6. The dual-boot control method according to any one of claims 4 and 5, wherein the operation member is a switch provided at an appropriate position of a housing surface of the personal computer.

7. A dual-boot computer connected with the Internet by way of a router in an information processor connected with a dedicated network, which is different from the Internet, the dual-boot computer comprising:
a first boot control means in which in response to the activation of the computer, a BIOS program is booted and a first OS preliminarily stored in a hard disk is deployed in a reset RAM so that the first OS is enabled to operate, and route setting for communication with at least the Internet is applied to the information processor; and
a second boot control means in which in the case where an attachable and detachable storage medium in which a second OS is stored is mounted in a storage medium mounting unit, the BIOS program is booted and the second OS preliminarily stored in the mounted attachable and detachable storage medium is preferentially deployed in the reset RAM so that the second OS is enabled to operate, and route setting for communication only with the information processor is applied to the information processor.
